# EUROPÄISCHE PATENTSCHRIFT

(11) **EP 1 425 208 B1**
(45) Veröffentlichungstag und Bekanntmachung des Hinweises auf die Patenterteilung: **19.01.2005**
(21) Anmeldenummer: 02776927.2
(22) Anmeldetag: 10.08.2002
(51) Int. Cl.: B62D 29/00, B21D 1/00

(54) **VERFAHREN ZUR HERSTELLUNG EINES STRUKTURELEMENTES**
METHOD FOR THE PRODUCTION OF A STRUCTURE ELEMENT
PROCEDE DE FABRICATION D'UN ELEMENT STRUCTUREL

(30) Priorität: 06.09.2001 DE 10143557
(43) Veröffentlichungstag der Anmeldung: 09.06.2004
(73) Patentinhaber: DaimlerChrysler AG, 70567 Stuttgart (DE)
(72) Erfinder: EIPPER, Konrad, 72108 Rottenburg (DE)
(86) Internationale Anmeldenummer: PCT/EP2002/008976
(87) Internationale Veröffentlichungsnummer: WO 2003/022663

(56) Entgegenhaltungen:
- WO-A-02/055923
- DE-A- 10 017 206
- US-B1- 6 270 600

## Beschreibung

Die Erfindung betrifft ein Verfahren zur Herstellung eines Strukturelementes nach dem Oberbegriff des Anspruchs 1.

Unter Berücksichtigung der gestiegenen Sicherheitsanforderungen und Steifigkeitsanforderungen von Kraftfahrzeugen werden zunehmend hohle Strukturelemente mit Schaumelementen verstärkt.

Problematisch bei der Verstärkung von Strukturelementen durch Schaumelemente ist das passgenaue Einbringen der Schaumelemente in den Hohlraum der Strukturelemente. Die gattunssgemäße US 5,806,919 beschreibt ein Strukturelement, versteift durch ein Schaumelement. Das Schaumelement weist zwei Schaumarten auf, einen verstärkenden Schaum mit hoher Dichte, der direkt an der Oberfläche des Strukturelements anliegt und einen Kern-Schaum mit geringer Dichte, der vollständig vom verstärkenden Schaum umgeben ist.

Das kombinierte Schaumelement wird in bereits strukturierter Form in eine Halbschale des Strukturelementes eingelegt. Die Halbschale wird durch eine weitere Halbschale geschlossen und an Flanschen verschweißt. Durch eine geeignete Verzahnung ist das Schaumelement im Hohlraum des Strukturelementes verankert.

Ein Strukturelement der selben Gattung wird in der EP 1 052 162 A2 beschrieben. Derartigen Bauteilen ist der prinzipieller Nachteil zu eigen, dass die Schaumelemente geformt werden müssen und in das Strukturelement eingelegt werden müssen. Dies ist in der Praxis nur bei mehrteiligen gestalteten Strukturteilen möglich die nach dem Positionieren des Schaumelementes z. B. durch verschweißen dauerhaft geschlossen werden. Die Passgenauigkeit des Schaumelementes ist hierbei oft unzureichend, worunter die Steifigkeit des Elementes leidet. Das Fügen der Halbschalen, das in der Regel durch Verschweißen erfolgt, bedeutet zudem einen weiteren technisch aufwendigen Arbeitsschritt.

Eine Alternative stellt das direkte Aufschäumen des Schaumelementes im Strukturelement dar. Ein derartiges Verfahren beschreibt die DE 199 12 618 A1, wonach ein Bauteil partiell verstärkt wird. Die in der DE 199 12 618 A1 beschriebenen Bauteile sind einteilig aufgebaut, die Geometrie ist jedoch verhältnismäßig einfach, so dass das Schaumhalbzeug nach der Formgebung in das Strukturelement eingebracht werden kann. Der Schaum füllt nach dem Schäumprozess den entsprechenden Hohlraum aus und stellt somit die Verstärkung und die Versteifung dar.

Das Formen des Strukturelementes nach der DE 199 12 618 A1 erfolgt durch Innenhochdruckumformung oder vergleichbare Techniken, die zu geschlossen Strukturelementen führen. Zur Formung von Strukturelementen aus Blechhalbzeugen (oder Gusshalbzeugen) ist das dort beschriebene Verfahren jedoch nicht anwendbar, da diese hohlraumbildend gefügt werden müssen

Der Erfindung liegt die Aufgabe zu Grunde ein gegenüber dem Stand der Technik günstigeres Verfahren zum Fügen von hohlen Strukturelementen bereitzustellen, die aus einem oder mehreren offenen Halbzeugen hergestellt werden und durch einen Festkörperschaum verstärkbar sind.

### Die Lösung der Aufgabe besteht in den Merkmalen des Anspruchs 1

Nach dem erfindungsgemäßen Verfahren nach Anspruch 1 wird mindestens eine Halbschale zu einem Hohlraum geformt und über mindestens zwei Lippen, die gemeinsam einen Flansch bilden, geschlossen. Das Verfahren zeichnet sich dadurch aus, dass sich mindestens zwischen den Lippen an deren Berührungsflächen ein Schaumhalbzeug befindet, dass durch eine Aktivierung, bevorzugt eine thermische Aktivierung verflüssigt wird. Während dieser Aktivierung werden die Lippen zusammengepresst und verschweißen so miteinander. Bei der Herstellung von Strukturelementen kann somit auf das sonst notwendige Verschweißen oder Verkleben verzichtet werden.

Hierbei kommt dem metallischen Schaummaterial im Bereich der Lippen die Funktion eines Lotes zu. Durch den hohen Druck an den Lippen kommt es zu einer Verflüssigung des Schaumhalbzeugs, da kein Raum zur Expansion zur Verfügung steht. Die entstandene Verbindung kann als eine Art Lotverbindung bezeichnet werden.

Zur besseren Ausbildung der Lotverbindungen sind die zu verbindenden Lippen mit dem selben oder ähnlichen Material wie das Schaumhalbzeug beschichtet.

Die Aktivierung des Schaumhalbzeuges erfolgt nach Anspruch 3 bevorzugt thermisch. Weitere Aktivierungen wie chemische Aktivierung elektrische Aktivierung oder Aktivierung durch Strahlung sind bei Anwendung entsprechender Rohschäume ebenfalls vorteilhaft.

Besonders vorteilhaft ist das Verfahren anzuwenden, wenn neben dem Verschweißen des Strukturelements dieses gleichzeitig mit einem Schaum verstärkt wird (Anspruch 4). Hierzu sind wiederum zwei Varianten des erfindungsgemäßen Verfahrens besonders zweckmäßig.

Nach Anspruch 5 wird das Schaumhalbzeug sowohl zwischen den Lippen des Flansches als auch an der übrigen Oberfläche der Halbschale hohlraumseitig, flächig angebracht. Bevorzugt wird das flächige Schaumhalbzeug vor der Formgebung der Halbschale auf deren Oberfläche angebracht (z. B. durch Verklammern oder Kleben).

Bevorzugt erfolgt dies jedoch durch Walzplatinieren. Das Schaumhalbzeug wird zusammen mit einem Blech, aus dem die Halbschale geformt wird, gewalzt. Auf diese Weise wird das Schaumhalbzeug fest mit dem Blech verbunden, die Verbindung bleibt auch während des Umformens im Wesentlichen bestehen. Die Dicke des Schaumhalbzeuges ist so bemessen, dass nach dem Aufschäumen der Hohlraum des Strukturelementes zumindest derart mit Schaum gefüllt ist, dass ein gewünschter Verstärkungseffekt eintritt (Anspruch 6).

In einer weiteren vorteilhaften Ausgestaltungsform des erfindungsgemäßen Verfahrens nach Anspruch 7 wird ein flächiges Schaumhalbzeug in den Hohlraum gelegt und durch die Lippen des Flansches, bevorzugt zweier gegenüberliegenden Flansche eingeklemmt. Durch die Aktivierung schäumt das Schaumhalbzeug im Hohlraum auf und füllt diesen aus. Zwischen den Lippen wird ein Aufschäumen verhindert, durch das flüssige Schaummaterial erfolgt wie bereits beschrieben eine Verschweißen des Flansches.

Das erfindungsgemäße Verfahren kann in einem Formgebungswerkzeug erfolgen. Das Werkzeug kann das Strukturelement vollständig oder nur im Bereich der Flansche umgeben. So wird gewährleistet, dass das Strukturelement gleichmäßig zugespannt und somit gleichmäßig verschweißt wird. Zudem kann über das Werkzeug die Aktivierungswärme für das Aufschäumen zugeführt werden (Anspruch 8).

Das Schaumhalbzeug besteht bevorzug auf der Basis von Metallen, insbesondere von Zink oder Aluminium. Üblicherweise ist es aus einem Pulver dieser Materialien zusammengesetzt, das ein Treibmittel z. b. Titanhydroxid enthält. Diese Mischung wird zu Platten gepresst, die das Schaumhalbzeug ergeben.

Schäume auf Zinkbasis bieten insbesondere beim Ausschäumen von Stahl den Vorteil eines zusätzlichen Korrosionsschutzes, zudem sind sie bei verhältnismäßig niedrigen Temperaturen verarbeitbar. Zinkschäume eignen sich deshalb zur Verstärkung von Aluminium- oder Magnesium-Strukturelementen. Schäume auf Aluminiumbasis haben ein besonders niedriges spezifisches Gewicht, was insbesondere für Leichtbauanwendungen vorteilhaft ist. Schäume auf Kunststoffbasis, z. B. Epoxidharze oder Polyurethane sind ebenfalls im Sinne der Erfindung zweckmäßig, die Verbindungsstelle sind jedoch in der Regel geringer belastbar als bei der Verwendung von Metallschäumen (Anspruch 9).

Im Folgenden werden vorteilhafte Ausgestaltungen des erfindungsgemäßen Verfahrens an Hand der Figuren näher erläutert.

Es zeigen:
- **Fig. 1**: einen Querschnitt eines Strukturelementes umfassend zwei Halbschalen mit walzplatinierten Schaumhalbzeug,
- **Fig. 2**: das Halbzeug aus Fig. 1 nach dem Aufschäumen und Verschweißen,
- **Fig. 3**: einen Querschnitt eines Strukturelementes umfassend zwei Halbschalen und Schaumelement,
- **Fig. 4**: einen Querschnitt eines Strukturelementes umfassend eine Halbschale mit walzplatinierten Schaumhalbzeug.

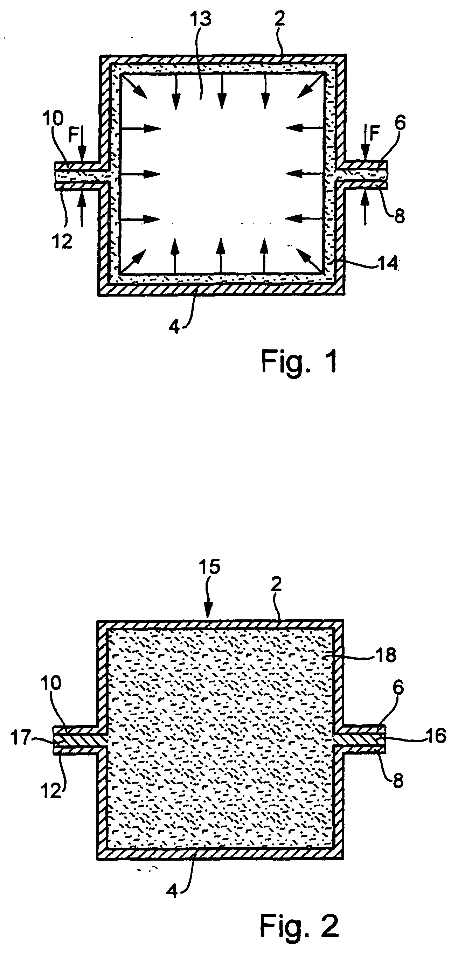

Das Strukturelement, dessen Querschnitt in **Fig. 1** dargestellt ist, umfasst zwei Halbschalen 2 und 4, die durch Lippen 6,8,10 und 12 flanschartig miteinander verbunden sind. Die Lippen sind mit einer Legierung auf Zink-Basis beschichtet. Die Halbschalen bilden einen Hohlraum 13. Stahlbleche, aus denen die Halbschalen 2 und 4 hergestellt sind, weisen eine walzplatinierte Schicht eines Schaumhalbzeuges 14 auf. Das Schaumhalbzeug 14 weist eine Dicke von ca. 3 mm auf und besteht auf der Basis von Zink. Die Schicht mit dem Schaumhalbzeug 14 auf den Halbschalen 2 und 4 weist in den Hohlraum 13.

Die Halbschalen 2 und 4 sind zur besseren Justierung in ein hier nicht dargestelltes Werkzeug eingespannt, das die zusammengesetzten Halbschalen 2 und 4 im vollem Umfang umschließt. Die Kraftwirkung die durch dieses Werkzeug ausgeht, wird durch die Kraftpfeile F angezeigt. Über das nicht dargestellte Werkzeug wird Wärme auf die Halbschalen 2 und 4 übertragen, diese heizen sich bis zu einer Schäumtemperatur des Schaumhalbzeuges auf. Die Schäumtemperatur liegt im Bereich des Schmelzpunktes des Schaumhalbzeuges 14, im angewendeten Fall eines Zinkschaum bei ca. 420° C.

Im Hohlraum 13 expandiert das Schaumhalbzeug 14 ungehindert und wird zum Schaum 18 (**Fig. 2**). In den Bereichen zwischen den Lippen 6, 8 und 10, 12 wird die Expansion des Schaumhalbzeuges 14 durch die Presskraft F unterbunden. Das Schaumhalbzeug schmilzt an diesen Stellen lokal auf und verschweißt oder verlötet die Lippen 6, 8 und 10, 12 nach dem Abkühlen zu flanschartigen Verbindungen 16, 17. Der Hohlraum 13 ist vollständig durch den Schaum 18 gefüllt und stellt eine Verstärkung des fertiggestellten Strukturelementes 15 dar.

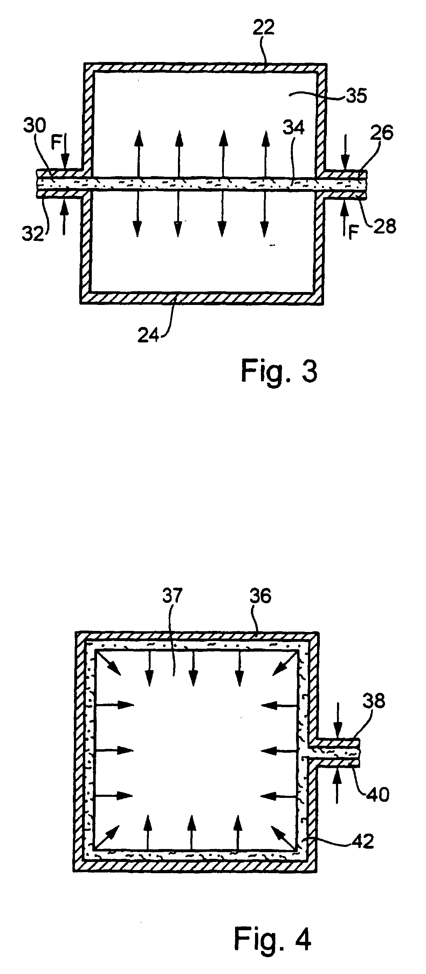

Die in **Fig. 3** dargestellten Halbschalen 22 und 24 sind analog der Fig. 1 aufgebaut, sie sind in das selbe Werkzeug eingespannt. Der Unterschied zur Fig.1 besteht darin, dass den Halbschalen eine Walzplatinierung mit dem Schaumhalbzeug fehlt, stattdessen wird ein plattenförmiges Schaumhalbzeug 34 zwischen die Lippen 26, 28 bzw. 30, 32 geklemmt. Dieses Schaumhalbzeug 34 durchquert den Hohlraum 35. Der Aufschäumprozess verläuft analog dem, der in den Figuren 1 und 2 dargestellt ist. Die Expansion des Schaumhalbzeuges 34 verläuft jedoch gemäß der Pfeilrichtungen in Fig. 3 vom Zentrum des Hohlraums 35 nach außen in Richtung der Halbschalen 22 und 24. Das resultierende Strukturelement entspricht dem aus Fig. 2.

**Fig. 4** stellt eine weitere Ausgestaltung der Erfindung analog der Fig. 1 dar. Es handelt sich im Gegensatz zu Fig. 1 um eine Halbschale 36, die derart geformt ist, dass sie einen Hohlraum 37 umschließt. Die Lippen 38, 40 werden ebenfalls durch das bereits genannte, hier nicht dargestellte Werkzeug zusammengepresst. Analog der Halbschalen 2 und 4 in Fig. 1 ist auch die Halbschale 36 mit einem walzplatinierten Schaumhalbzeug 42 versehen. Der Aufschäumprozess erfolgt analog den Figuren 1 und 2.

Alternativ zu den beschriebenen Anordnungen der Verbindung können die Lippen stumpf aufeinander treffen oder nach innen verlaufen. Erfindungswesentlich ist, dass genügend Berührungsfläche besteht um eine Verschweißung oder Verlötung durch das Schaummaterial durchzuführen.

Die Geometrie des Strukturelementes ist hierbei nahezu beliebig. Das Strukturelement kann aus mehr als zwei Halbschalen aufgebaut sein, es kann zudem verschiedene Kammern aufweisen, die den Hohlraum unterteilen.

Vorteilhafte Alternativen der Werkstoffe sind eine Kombination von Stahlblechen und Aluminiumschaum, durch diese Paarung kann das Gewicht des Strukturelementes gegenüber dem Zinkschaum reduziert werden. Ferner ist ein Paarung von Aluminiumblechen und Zinkschaum zweckmäßig, da die Schmelztemperatur und somit die Schäumtemperatur von Zink niedriger liegt als die Schmelztemperatur von Aluminiumblechen. Ebenfalls zweckmäßig ist eine Paarung von Magnesium Halbschalen mit einem Zinkschaum. Magnesium lässt sich zwar nicht vorteilhaft als Blech verarbeiten, Gussteile oder Strangpressteile aus Magnesium (sowie aus Aluminium) sind für die Verwendung als Halbschalen im erfindungsgemäßen Verfahren ebenfalls geeignet.

Der Einsatz von Kunststoffschäumen ist im Sinne der Erfindung dann zweckmäßig, wenn die Anforderungen an die Verbindung der Halbschalen geringer ist, etwa wenn das Strukturelement in einen Verbund eingesetzt wird und in diesem keine wesentlichen Belastung auf die Verbindungsstelle wirken.

Das erfindungsgemäße Verfahren findet besonders Anwendung im Automobilbau, insbesondere im Karosseriebau. Geeignete Bauteile für die erfindungsgemäße Verstärkung sind u. a. die A-, B- und C-Säulen, Schweller, Längsträger, Türen und Knotenpunkte der Säulen oder Türen. Derart verstärkte Bauteile sind als Crashprofile gut geeignet, da durch die Schaumverstärkung ein hohes Maß an Energie absorbiert werden kann.

## Patentansprüche

1. Verfahren zur Herstellung eines Strukturelementes, mit mindestens einer hohlraumbildenden Halbschale (2, 4, 22, 24, 36), umfassend mindestens zwei Lippen (6, 8, 10, 12, 26, 28, 30, 32,38, 40) die gemeinsam mindestens einen Flansch bilden,
**dadurch gekennzeichnet,**
• **dass** mindestens die Lippen (6, 8, 10, 12, 26, 28, 30, 32,38, 40) an ihren Berührungsflächen mit einem metallischen Schaumhalbzeug (14, 34, 42) versehen werden,
• **dass** die Lippen (6, 8, 10, 12, 26, 28, 30, 32,38, 40) mit einer Spannkraft (F) zusammengefügt werden,
• **dass** das Schaumhalbzeug (14, 34, 42) aktiviert wird und
• die Lippen (6, 8, 10, 12, 26, 28, 30, 32,38, 40) durch das aktivierte Schaumhalbzeug (14, 34, 42) verschweißen.

2. Verfahren nach Anspruch 1,
**dadurch gekennzeichnet,**
**dass** die Halbschalen zumindest an den Lippen mit dem Metall des Schaumhalbzeugs beschichtet sind.

3. Verfahren nach Anspruch 1,
**dadurch gekennzeichnet,**
**dass** das Schaumhalbzeug (14, 34, 42) thermisch aktiviert wird.

4. Verfahren nach Anspruch 1 oder 2,
**dadurch gekennzeichnet,**
**dass** das Schaumhalbzeug (14, 34, 42) zwischen den Lippen (6, 8, 10, 12, 26, 28, 30, 32,38, 40) und im Hohlraum (13, 35, 37) angebracht ist und durch die Aktivierung des Schaumhalbzeuges (14, 34, 42) der Hohlraum (13, 35, 37) mindestens teilweise ausgeschäumt wird.

5. Verfahren nach einem der Ansprüche 1 bis 3,
**dadurch gekennzeichnet,**
**dass** das Schaumhalbzeug (14, 42) auf der Oberfläche der Halbschale (2, 4, 36) hohlraumseitig flächig angebracht wird.

6. Verfahren nach Anspruch 4,
**dadurch gekennzeichnet,**
**dass** das Schaumhalbzeug (14, 42) auf der Oberfläche eines Bleches durch Walzplatinieren aufgebracht wird und das Blech zu der Halbschale (2, 4, 36) umgeformt wird.

7. Verfahren nach einem der Ansprüche 1 bis 3,
**dadurch gekennzeichnet,**
**dass** ein flächiges Schaumhalbzeug (34) zwischen den Lippen (26, 28, 30, 32) des mindestens einen Flansches eingeklemmt wird und sich mindestens Teilbereiche des Schaumhalbzeugs (34) frei im Hohlraum befinden.

8. Verfahren nach einem der Ansprüche 1 bis 6,
**dadurch gekennzeichnet,**
**dass** die mindestens eine Halbschale (2, 4, 22, 24, 36) in ein Werkzeug eingespannt wird.

9. Verfahren nach einem der Ansprüche 1 bis 7,
**dadurch gekennzeichnet,**
**dass** das Schaumhalbzeug (14, 34, 42) auf der Basis von Metall, insbesondere von Zink, Zinn oder Aluminium besteht.

## Claims

1. A process for the manufacture of a structural element having at least one section (2, 4, 22, 24, 36) which forms a hollow space, comprising at least two lips (6, 8, 10, 12, 26, 28, 30, 32, 38, 40) which together form at least one flange,
**characterised in that**
- at least the lips (6, 8, 10, 12, 26, 28, 30, 32, 38, 40) are provided with a metallic semi-finished foam product (14, 34, 42) on their contact surfaces,
- the lips (6, 8, 10, 12, 26, 28, 30, 32, 3 8, 40) are joined together with a clamping force (F),
- the semi-finished foam product (14, 34, 42) is activated and
- the lips (6, 8, 10, 12, 26, 28, 30, 32, 38, 40) are welded by the activated semi-finished foam product (14, 34, 42).

2. A process in accordance with claim 1,
**characterised in that**
at least the lips of the sections are coated with the metal of the semi-finished foam product.

3. A process in accordance with claim 1,
**characterised in that**
the semi-finished foam product (14, 34, 42) is thermally activated.

4. A process in accordance with claim 1 or 2,
**characterised in that**
the semi-finished foam product (14, 34, 42) is applied between the lips (6, 8, 10, 12, 26, 28, 30, 32, 38, 40) and in the hollow space (13, 35, 37) and the hollow space (13, 35, 37) is at least partially filled with foam by the activation of the semi-finished foam product (14, 34, 42).

5. A process in accordance with one of claims 1 to 3,
**characterised in that**
the semi-finished foam product (14, 42) is applied in a layer to the surface of the side of the section (2, 4, 36) delimiting the hollow space.

6. A process in accordance with claim 4,
**characterised in that**
the semi-finished foam product (14, 42) is applied to the surface of a metal sheet by means of roller platinising and the sheet is shaped to make the section (2, 4, 36).

7. A process in accordance with one of claims 1 to 3,
**characterised in that**
a flat semi-finished foam product (34) is clamped between the lips (26, 28, 30, 32) of the at least one flange and at least parts of the semi-finished foam product (34) are located freely in the hollow space.

8. A process in accordance with one of claims 1 to 6,
**characterised in that**
the at least one section (2, 4, 22, 24, 36) is clamped in a tool.

9. A process in accordance with one of claims 1 to 7,
**characterised in that**
the semi-finished foam product (14, 34, 42) is made of metal, in particular zinc, tin or aluminium.

## Revendications

1. Procédé de fabrication d'un élément structurel avec au moins une demi-coquille (2, 4, 22, 24, 36) formant une cavité, comprenant au moins deux lèvres (6, 8, 10, 12, 26, 28, 30, 32, 38, 40) qui forment ensemble au moins une bride,
**caractérisé en ce**
**qu'**au moins les lèvres (6, 8, 10, 12, 26, 28, 30, 32, 40) sont pourvues sur leurs surfaces de contact d'un demi-produit métallique en mousse (14, 34, 42),
en ce que les lèvres (6, 8, 10, 12, 26, 28, 30, 32, 38, 40) sont jointes avec une force élastique (F),
en ce que le demi-produit en mousse (14, 34, 42) est activé et
les lèvres (6, 8, 10, 12, 26, 28, 30, 32, 38, 40) se réunissent par l'activation du demi-produit en mousse (14, 34, 42).

2. Procédé selon la revendication 1,
**caractérisé en ce que**
les demi-coquilles sont recouvertes au moins aux lèvres du métal du demi-produit en mousse.

3. Procédé selon la revendication 1,
**caractérisé en ce que**
le demi-produit en mousse (14, 34, 42) est activé thermiquement.

4. Procédé selon la revendication 1 ou 2,
**caractérisé en ce que**
le demi-produit en mousse (14, 34, 42) est placé entre les lèvres (6, 8, 10, 12, 26, 28, 30, 32, 38, 40) et dans la cavité (13, 35, 37), et la cavité (13, 35, 37) mousse au moins partiellement par l'activation du demi-produit en mousse (14, 34, 42).

5. Procédé selon l'une des revendications 1 à 3,
**caractérisé en ce que**
le demi-produit en mousse (14, 42) est placé de manière aplatie sur la surface de la demi-coquille (2, 4, 36) côté cavité.

6. Procédé selon la revendication 4,
**caractérisé en ce que**
le demi-produit en mousse (14, 42) est placé par platinage sur la surface d'une tôle et la tôle est transformée en la demi-coquille (2, 4, 36).

7. Procédé selon l'une des revendications 1 à 3,
**caractérisé en ce**
**qu'**un demi-produit en mousse aplati (34) est serré entre les lèvres (26, 28, 30, 32) d'au moins une bride, et en ce que des zones au moins partielles du demi-produit en mousse (34) se trouvent librement dans la cavité.

8. Procédé selon l'une des revendications 1 à 6,
**caractérisé en ce**
**qu'**au moins une demi-coquille (2, 4, 22, 24, 36) est serrée dans un outil.

9. Procédé selon l'une des revendications 1 à 7,
**caractérisé en ce que**
le demi-produit en mousse (14, 34, 42) reste sur la base de métal, en particulier de zinc, d'étain ou d'aluminium.
